# EUROPEAN PATENT APPLICATION

(11) **EP 4 671 890 A1**
(43) Date of publication of application: **31.12.2025**
(21) Application number: 24759942.6
(22) Date of filing: 09.01.2024
(51) Int. Cl.: G05B 23/02

(54) **INFORMATION PROCESSING DEVICE, INFORMATION PROCESSING METHOD, AND INFORMATION PROCESSING PROGRAM**

(30) Priority: 22.02.2023 JP 2023026574
(71) Applicant: Yokogawa Electric Corporation, Tokyo 180-8750 (JP)
(72) Inventor: OGAWA, Hiromitsu, Musashino-shi, Tokyo 180-8750 (JP); KONADA, Soichiro, Musashino-shi, Tokyo 180-8750 (JP); IKEDA, Kenta, Musashino-shi, Tokyo 180-8750 (JP)
(74) Representative: Winter, Brandl - Partnerschaft mbB
(86) International application number: PCT/JP2024/000125
(87) International publication number: WO 2024/176634

(57) **Abstract**

A portable edge device (50) provided in a manner of being attachable to a field device (2) of a plant acquires smoothed or non-smoothed output data output from the field device (2), estimates the non-smoothed output data in a case where the output data is smoothed, detects a physical phenomenon generated in the field device (2) by analyzing the non-smoothed output data, and transmits a detection result of the physical phenomenon to an external device.

## Description

### Field

The present invention relates to an information processing device, an information processing method, and an information processing program.

### Background

Conventionally, in process control of various plants using oil, petrochemistry, chemistry, gas, and the like, it is known that a controller performs damping processing on an output value of a field device of the plants in order to stably control the process (see, for example, Patent Literature 1).

On the other hand, in the plants, there is a physical phenomenon that is generated in a very short time. For example, in a case where a pump is used to transfer or pump liquid, a physical phenomenon that may hinder production in the plants, such as cavitation, a water hammer, and a slag flow may be generated in a pipe of the pump.

### Citation List

### Patent Literature

Patent Literature 1: Japanese Patent Application Laid-open No 2007-213483

### Summary

### Technical Problem

Thus, there is room for further improvement in a conventional technology in order to easily detect a physical phenomenon generated in a plant while controlling an influence on existing process control.

Specifically, in the conventional technology, for example, in a case where a field device is a pressure transmitter that measures pressure of liquid flowing through a pipe, damping processing is performed on a pressure value output from the pressure transmitter, and a controller handles smoothed data in which a pressure fluctuation is smoothed more than an actual fluctuation. However, since the smoothed data has a rounded time variation and is blunt, so to speak, it is difficult to detect a physical phenomenon generated in a very short time from the blunt data.

On the other hand, the process control system of the plant is required to operate stably. From this viewpoint, for example, it is difficult to take measures in such a manner that the controller handles data with larger time variation by changing a damping coefficient in the damping processing since there is a possibility that the controller cannot perform tracking.

In addition, it is not easy to change a design of the system in such a manner that the controller can perform the tracking in view of the current situation in which the process control system is required to continuously operate.

An object of the present invention is to provide an information processing device, an information processing method, and an information processing program capable of easily detecting a physical phenomenon generated in a plant while controlling an influence on existing process control.

### Solution to Problem

According to an aspect of an embodiment, an information processing device is a portable information processing device provided in a manner of being attachable to a field device of a plant. The information processing device includes an acquisition unit that acquires smoothed or non-smoothed output data output from the field device, an estimation unit that estimates the non-smoothed output data in a case where the output data is smoothed, a detection unit that detects a physical phenomenon generated in the field device by analyzing the non-smoothed output data, and a transmission unit that transmits a detection result of the physical phenomenon to an external device.

According to an aspect of an embodiment, an information processing method in which a portable computer provided in a manner of being attachable to a field device of a plant executes processing of acquiring smoothed or non-smoothed output data output from the field device, estimating the non-smoothed output data in a case where the output data is smoothed, detecting a physical phenomenon generated in the field device by analyzing the non-smoothed output data, and transmitting a detection result of the physical phenomenon to an external device.

According to an aspect of an embodiment, an information processing program causing a portable computer provided in a manner of being attachable to a field device of a plant to execute processing of acquiring smoothed or non-smoothed output data output from the field device, estimating the non-smoothed output data in a case where the output data is smoothed, detecting a physical phenomenon generated in the field device by analyzing the non-smoothed output data, and transmitting a detection result of the physical phenomenon to an external device.

### Advantageous Effects of Invention

According to one embodiment, it is possible to provide an information processing device, an information processing method, and an information processing program capable of easily detecting a physical phenomenon generated in a plant while controlling an influence on existing process control.

### Brief Description of Drawings

FIG. 1 is a view for describing a problem of a conventional technology.
FIG. 2 is a view for describing an outline of an information processing method according to an embodiment.
FIG. 3 is a view illustrating an overall configuration example of a plant control system according to the embodiment.
FIG. 4 is a block diagram illustrating a configuration example of an edge device according to the embodiment.
FIG. 5 is a flowchart illustrating a processing procedure executed by the edge device according to the embodiment.
FIG. 6 is a view illustrating an example of a pattern of processing sharing between devices (part 1).
FIG. 7 is a view illustrating an example of a pattern of processing sharing between devices (part 2).
FIG. 8 is a view illustrating an example of a pattern of processing sharing between devices (part 3).
FIG. 9 is a view illustrating an example of a pattern of processing sharing between devices (part 4).
FIG. 10 is a view for describing a case of configuring a mesh network.
FIG. 11 is a view for describing a case where a detected physical phenomenon is shared.
FIG. 12 is a view for describing an edge device according to a first modification example.
FIG. 13 is a view for describing an edge device according to a second modification example.
FIG. 14 is a view for describing collection and replacement of the edge device.
FIG. 15 is a hardware configuration diagram illustrating an example of a computer that realizes a function of the edge device according to the embodiment.

### Description of Embodiments

Hereinafter, embodiments of an information processing device, an information processing method, and an information processing program disclosed in the present application will be described in detail with reference to the drawings. Note that the invention is not limited by the embodiments. In addition, the same elements are denoted by the same reference sign, redundant description is appropriately omitted, and the embodiments can be appropriately combined within a range without contradiction.

In addition, hereinafter, in a case where a plurality of the same elements needs to be distinguished, the same reference signs are followed by numbering in a form of "-n" (n is a natural number). In a case where no distinction is required, only the same reference signs are assigned without numbering in the form, and the elements are collectively called.

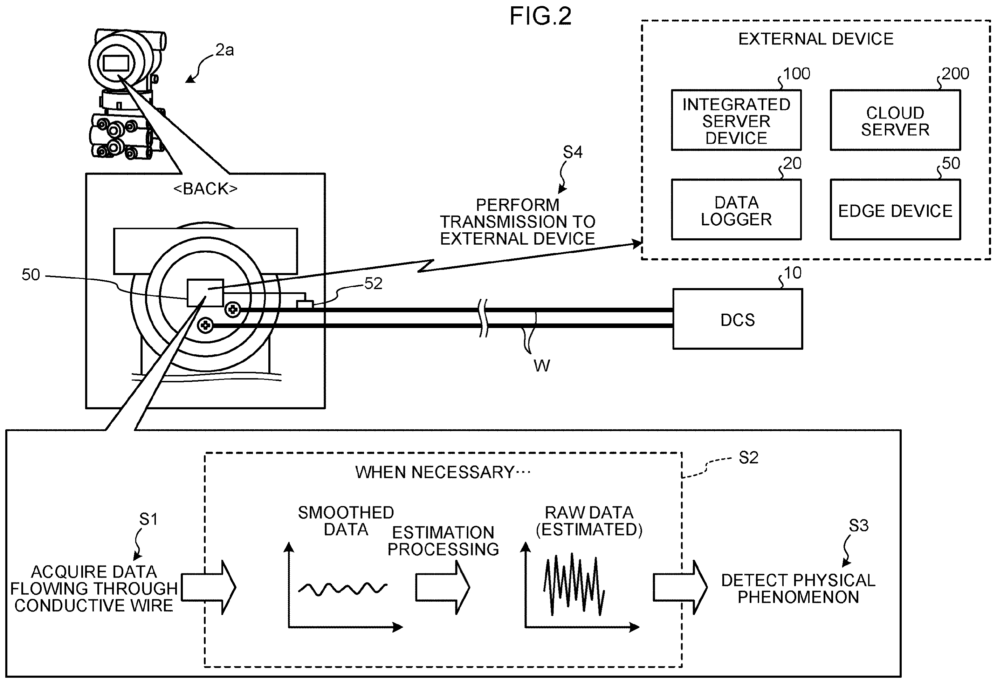

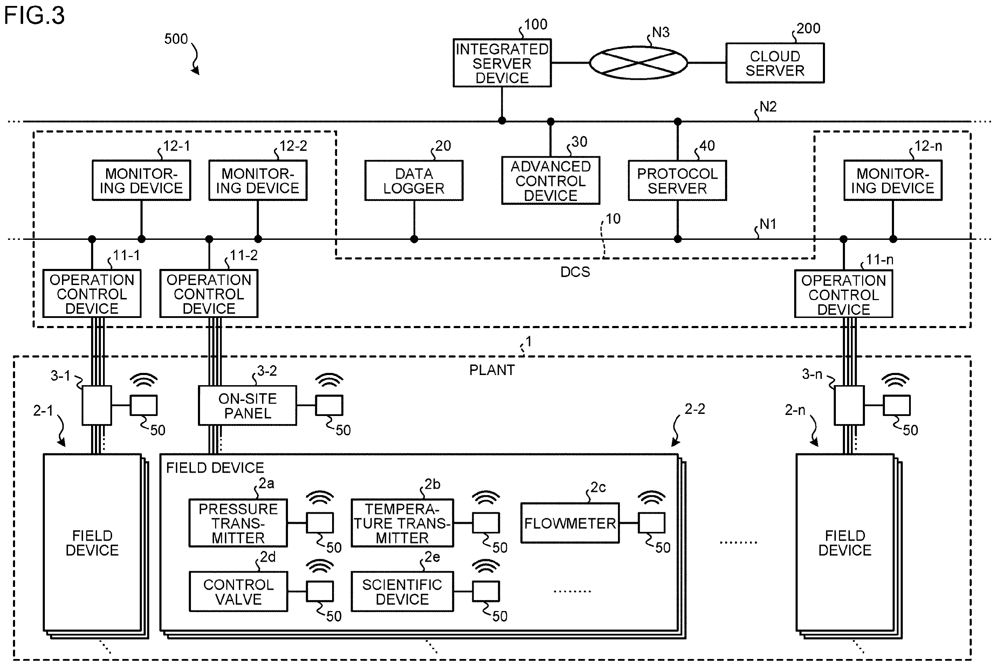

Furthermore, in the following description, the information processing device according to the embodiment is assumed to be an edge device 50 (see FIG. 2 and the like). The edge device 50 is a portable information processing device to realize Industrial Internet of Things (IIoT) in a process control system 500 according to the embodiment (see FIG. 3).

Furthermore, hereinafter, "damping" of process data output from a field device in the process control is appropriately referred to as "smoothing". Furthermore, smoothed data is appropriately referred to as "smoothed data". On the other hand, the data before the smoothing is appropriately referred to as "raw data". The raw data corresponds to an example of "non-smoothed output data".

### [Outline of an information processing method according to the present embodiment]

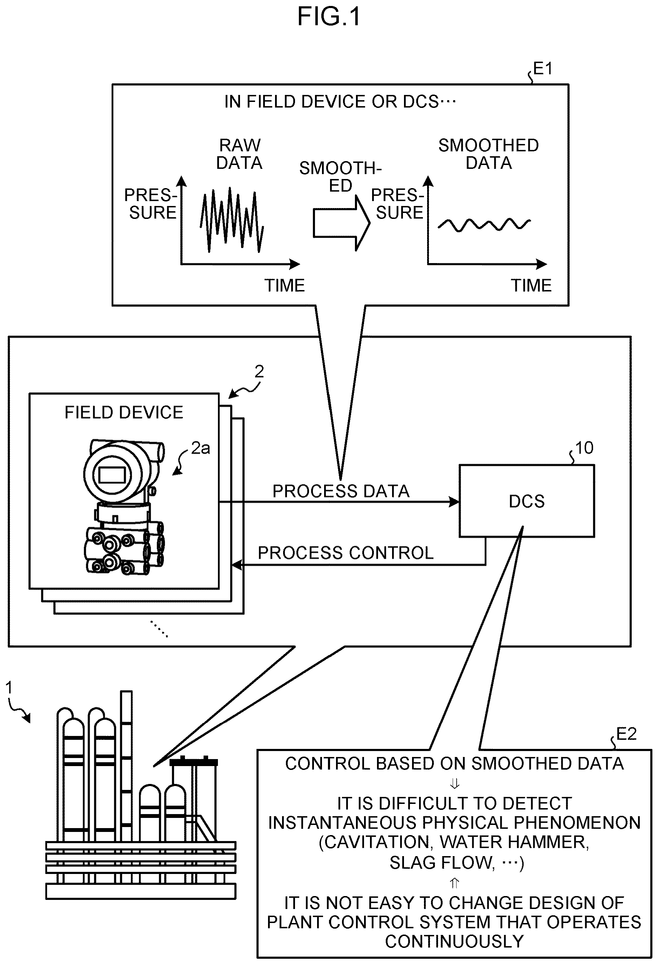

First, an outline of an information processing method according to the embodiment will be described with reference to FIG. 1 and FIG. 2. FIG. 1 is a view for describing a problem of a conventional technology. FIG. 2 is a view for describing an outline of the information processing method according to the embodiment.

As illustrated in FIG. 1, in a plant 1, a field device 2 is provided at various places of the plant 1. The field device 2 is configured to be able to communicate with another device (such as a DCS 10 described later) by wireless communication, wired communication, or the like.

The field device 2 is classified into a sensor device, an operation device, and the like. The sensor device is, for example, a device that acquires (detects or measures, for example) a physical quantity. Examples of the sensor device include a pressure transmitter 2a, a temperature transmitter 2b (see FIG. 3), a flowmeter 2c (see FIG. 3), and a scientific device 2e (see FIG. 3). The operation device is, for example, a device that operates the physical quantity. Examples of the operation device include a pump, a control valve, a fan, and the like, and are driven by a motor, an actuator, and the like.

The sensor device of the field device 2 transmits process data, which is data indicating a state of a process in the plant 1, to distributed control systems (DCS) 10. The DCS 10 are a so-called distributed control system including a plurality of process controllers and a plurality of operation monitoring devices.

The DCS 10 mainly perform process control by proportional-integral-differential (PID) control or the like according to the process data from the field device 2. That is, the DCS 10 control the operation device according to an operation amount for the operation device to be controlled in the field device 2 which operation amount is determined according to the process data.

At this time, as illustrated in a description E1 in the drawing, the process data is smoothed by the field device 2 or the DCS 10 in such a manner that pulsation of a data waveform is buffered for stable control of the plant 1. Then, as illustrated in a description E2 in the drawing, the DCS 10 execute process control based on the smoothed data after the smoothing.

However, since the smoothed data is blunted with a rounded time variation, it is difficult to detect an instantaneous physical phenomenon such as cavitation, a water hammer, and a slag flow from the blunted data as illustrated in the description E2.

On the other hand, the process control system 500 of the plant 1 is required to operate stably. From this viewpoint, for example, it is difficult to take measures in such a manner that the DCS 10 handle data having larger time variation (such as raw data) by changing a damping coefficient in smoothing processing since there is a possibility that the DCS 10 cannot perform tracking.

Although it is conceivable to change a design of the system in such a manner that the DCS 10 can perform tracking, there is also a current situation in which it is not easy to change the design of the continuously operating process control system 500 as illustrated in the description E2. It can also be said that this makes it difficult to detect the instantaneous physical phenomenon in a case where the conventional technology is used.

Thus, in the information processing method according to the embodiment, the edge device 50 executes processing of acquiring smoothed or non-smoothed output data output from the field device 2, estimating the non-smoothed output data in a case where the output data is smoothed, detecting a physical phenomenon generated in the field device 2 by analyzing the non-smoothed output data, and transmitting a detection result of the physical phenomenon to an external device.

As described above, the edge device 50 is a portable information processing device to realize IIoT in the process control system 500 according to the embodiment. The edge device 50 is an information processing device provided in a manner of being attachable to/detachable from the field device 2 and provided in a manner of being communicable with an external device. In addition, the edge device 50 is configured as a small device of about 5 cm square, for example.

A specific description will be made with reference to FIG. 2. Here, it is assumed that the field device 2 is the pressure transmitter 2a. The edge device 50 is attached, for example, by being pasted to a vicinity of a terminal block on a back of the pressure transmitter 2a.

The edge device 50 is mounted with a battery, and a power source is secured by the battery. The battery is, for example, a solar battery. Furthermore, the edge device 50 includes a current sensor 52.

The current sensor 52 is realized as a non-contact type clampless sensor. That is, the current sensor 52 is attached by being pasted to, for example, a conductive wire W extending from the pressure transmitter 2a toward the DCS 10. In addition, the current sensor 52 indirectly reads current flowing through the conductive wire W from the pressure transmitter 2a toward the DCS 10. The current sensor 52 measures a magnetic field, which is generated when the current flows through the conductive wire W, by a magnetic sensor in a head of the current sensor 52, derives the magnetic field as a current value, and realizes current monitoring.

Here, it is assumed that a predetermined damping coefficient is set in the pressure transmitter 2a, and a current signal flowing through the conductive wire W from the pressure transmitter 2a toward the DCS 10 is smoothed data.

Then, in the information processing method according to the embodiment, the edge device 50 acquires data flowing through the conductive wire W by using the current sensor 52 (Step S1). Then, in a case where the acquired data is the smoothed data, the edge device 50 executes estimation processing of estimating raw data that is non-smoothed output data as necessary (Step S2).

Note that since damping corresponds to integration in a broad sense, the edge device 50 estimates the raw data by, for example, differential processing that is an inverse operation of integration in this estimation processing. Here, the differential processing is not a limitation, and the raw data may be estimated by difference processing, partial differential processing, or the like.

Furthermore, in a case where the pressure transmitter 2a is set to output the raw data, the edge device 50 may not execute Step S2. The edge device 50 can set presence or absence of such processing in advance as setting information.

Then, the edge device 50 detects a physical phenomenon on the basis of the raw data estimated by the estimation processing or output from the pressure transmitter 2a (Step S3). In the edge device 50, a program of executing an algorithm of detecting a physical phenomenon on the basis of raw data is implemented in advance, and an instantaneous physical phenomenon can be detected by detection processing performed by the program. This program can be appropriately replaced remotely, for example, according to the physical phenomenon or the like to be detected.

In addition, for example, in a case where the physical phenomenon is detected by the detection processing, the edge device 50 transmits the detection result to the external device (Step S4). The edge device 50 performs transmission to the external device by, for example, Wi-Fi (registered trademark), Bluetooth (registered trademark), or the like.

The external device is, for example, a data logger 20, another edge device 50, an integrated server device 100, a cloud server 200, or the like. An overall configuration example of the process control system 500 including these will be described later with reference to FIG. 3.

In a case where notification indicating generation of the physical phenomenon is given from the edge device 50, the external device stores the physical phenomenon as a log or causes the DCS 10 or the like to perform control corresponding to the generation of the physical phenomenon on the basis of the operation of the existing process control, for example.

As described above, in the information processing method according to the embodiment, the edge device 50, which is a portable information processing device provided to be attachable to the field device 2 of the plant 1, executes processing of acquiring the smoothed or non-smoothed output data output from the field device 2, estimating the non-smoothed output data in a case where the output data is smoothed, detecting the physical phenomenon generated in the field device 2 by analyzing the non-smoothed output data, and transmitting the detection result of the physical phenomenon to the external device.

Thus, according to the information processing method according to the embodiment, it is possible to easily detect the physical phenomenon generated in the plant 1 while controlling an influence on the existing process control.

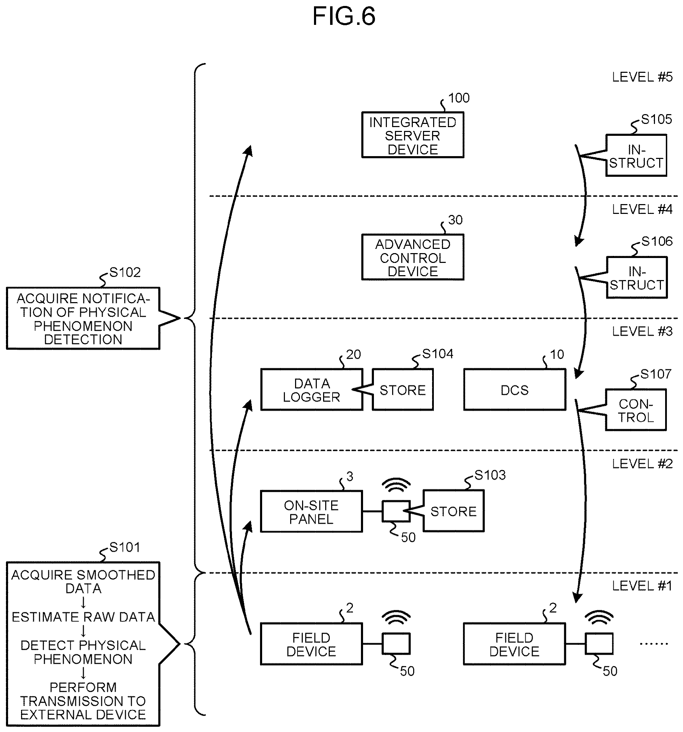

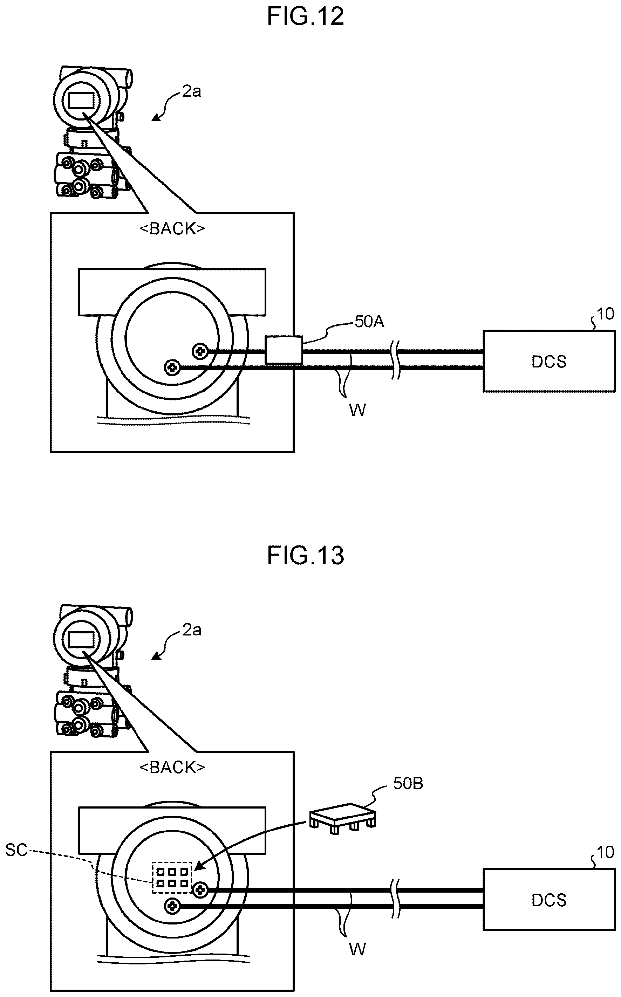

Note that "attachable to the field device 2" includes a case where attachment to a vicinity of the field device 2 is possible in addition to a case where attachment to a main body of the field device 2 is possible. Furthermore, an installation form of the edge device 50 is not limited to the example illustrated in FIG. 2. A modification example of the installation form of the edge device 50 will be described later with reference to FIG. 12 to FIG. 13. Furthermore, although the edge device 50 performs the estimation processing of the raw data and the detection processing of the physical phenomenon in the description using FIG. 2, some of these kinds of processing may be performed by the external device. A specific example of this processing sharing will be described later with reference to FIG. 6 to FIG. 9 and the like.

Hereinafter, a configuration example of the process control system 500 including the edge device 50 according to the embodiment will be described more specifically.

### [Overall configuration example of the process control system 500]

FIG. 3 is a view illustrating an overall configuration example of the process control system 500 according to the embodiment. The process control system 500 is a plant system that executes operation control and monitoring of the plant 1.

As illustrated in FIG. 3, the process control system 500 includes the plant 1, the DCS 10, the data logger 20, an advanced control device 30, a protocol server 40, the integrated server device 100, and the cloud server 200.

The plant 1 is an example of various plants using oil, petrochemistry, chemistry, gas, and the like. The plant 1 includes a factory or the like having various facilities for acquiring a product. Examples of the product are liquefied natural gas (LNG), resin (such as plastic or nylon), a chemical product, and the like. Examples of the facilities include, for example, factory facilities, machine facilities, production facilities, power generation facilities, storage facilities, and facilities at a well of oil, natural gas, or the like.

As already described, the field device 2 is provided at various places of the plant 1. The field device 2 is the pressure transmitter 2a, the temperature transmitter 2b, the flowmeter 2c, a control valve 2d, the scientific device 2e, or the like. The flowmeter 2c is a Coriolis flow meter, an electromagnetic flowmeter, a vortex flowmeter, or the like. The scientific device 2e is an oxygen concentration meter, a pH meter, or the like.

In addition, in the plant 1, an on-site panel 3 is provided for each group of the field devices 2 such as the field devices 2-1, 2-2,..., and 2-n. The on-site panel 3 is, for example, a relay terminal board. The on-site panel 3 is connected to the plurality of field devices 2, and relays and outputs a signal output from each of the field devices 2 to the DCS 10, for example.

In addition, the edge device 50 is attached to each of the field devices 2 and the on-site panel 3. In a case of being provided in the on-site panel 3, the edge device 50 may be placed in the on-site panel 3, and aggregate and store data from each of the connected field devices 2, for example. In a case of being placed in the on-site panel 3, the edge device 50 can secure a power source easily when being directly connected to the on-site panel 3.

As illustrated in FIG. 3, the edge device 50 can be attached to each of the pressure transmitter 2a, the temperature transmitter 2b, the flowmeter 2c, the control valve 2d, and the scientific device 2e. In addition to the above, the edge device 50 may be attached to a level meter, a weight scale (load cell), a distance meter, or the like. The edge device 50 attached to the control valve 2d reads a signal corresponding to an actual opening of the valve (4 to 20 mA). In the detection processing of the physical phenomenon by the edge device 50, rust, clogging, and the like of a pipe, a foreign object in a pump, a damage of an impeller, and the like may also be detected in addition to the cavitation, the water hammer, and the slag flow by estimation of the raw data sampled at a high speed.

In the detection processing of the physical phenomenon, in a case where the edge device 50 is attached to, for example, the flowmeter 2c, a slag flow, a surge phenomenon, and the like can be seen. In a case where the edge device 50 is attached to the control valve 2d, for example, stick-slip can be seen from a difference between an opening instruction and an actual opening. In a case where the actual opening swings, very small changes in the process (such as pulsation, foreign object contamination, clogging of asphaltene or hydride, leakage, and the like) can be seen. When these are minutely generated, there is an influence that a gasket and a stem are damaged. In a case where the edge device 50 is attached to the temperature transmitter 2b, heat insulation effect leakage (deterioration of a heat insulation material) and the like can be seen.

The DCS 10 include a plurality of process controllers and a plurality of operation/monitoring devices. Each of the process controllers and each of the field devices 2 in the plant 1 are communicably connected to each other via a field bus or the like. An operation control device 11 is an example of the process controller. A monitoring device 12 is an example of an operation/monitoring device.

The operation control device 11 collects data from each of the field devices 2 and notifies the advanced control device 30 of the data as the process data. In addition, the operation control device 11 executes process control on the basis of an instruction from the advanced control device 30 which instruction is based on the process data.

The monitoring device 12 is a device to monitor or arbitrarily operate the plant 1. The monitoring device 12 displays various kinds of information related to the plant 1, and causes an operator to monitor operation of each of the field devices 2, conditions of various processes, and the like.

In addition, the monitoring device 12 receives desired instruction operation for each of the field devices 2 from the operator, and gives notification to the operation control device 11. The operation control device 11 controls each of the field devices 2 on the basis of the received instruction operation.

The data logger 20 performs logging of data transmitted from each of the edge devices 50 and stores the data as logging information related to physical phenomenon detection.

The DCS 10, the data logger 20, and the protocol server 40 are communicably connected to each other via a network N1. The advanced control device 30, the protocol server 40, and the integrated server device 100 are communicably connected to each other via a network N2. The integrated server device 100 and the cloud server 200 are communicably connected to each other via a network N3.

For example, a dedicated control bus is employed as the network N1. Data transmitted through the network N1 is data related to the plant 1 and includes data for performing control or the like of the plant 1. Such control may include real-time control. Thus, the network N1 is duplicated, for example, from a viewpoint of securing reliability of data transmission.

In a case of being duplicated, the network N1 may transmit the same data in parallel through two communication paths. In this case, even when a failure or the like is generated in one of the duplicated communication paths, the network N1 can maintain data transmission (transmission and reception) in the other communication path. As such a network N1, Vnet/IP (registered trademark) or the like can be used.

Furthermore, the network N2 can use a local area network (LAN) or the like. In addition, the network N2 can also be duplicated from a viewpoint of securing reliability, and the like. In addition, the network N3 can use the Internet, a mobile phone network, or the like.

Each of the edge devices 50 can transmit data to the external device such as the data logger 20, another edge device 50, the integrated server device 100, or the cloud server 200 by the wireless communication or wired communication via the networks N1, N2, and N3.

Note that FIG. 3 does not necessarily represent a physical configuration. Thus, network topology in the process control system 500 is not limited to a bus type illustrated in FIG. 3.

The advanced control device 30 is an example of a control device that executes advanced process control (APC) of the plant 1. The advanced control device 30 acquires the process data from the operation control device 11 via the protocol server 40. In addition, the advanced control device 30 determines an operation condition of the field device 2 according to the acquired process data, an instruction from the integrated server device 100, or the like. In addition, the advanced control device 30 instructs operation control of the field device 2 which control is based on the determined operation condition. That is, the advanced control device 30 notifies the operation control device 11 of an operation amount of each of the field devices 2, which amount corresponds to the determined operation condition, via the protocol server 40.

The protocol server 40 is a device that performs format conversion, transfer, and the like of data between the network N1 and the network N2.

For example, a protocol (such as a data format, communication standard, and the like) of the network N1 is different from a protocol of the network N2, and the protocol server 40 performs protocol conversion or the like of data therebetween. The data format in the network N1 may conform to a unique standard of each process controller that controls the operation of the plant 1. The data format in the network N2 may follow a protocol of the advanced control device 30 and the integrated server device 100, for example, a protocol such as open platform communications (OPC). The protocol server 40 may be an OPC server.

The integrated server device 100 is a device that integrally manages the process control system 500. The integrated server device 100 collects, for example, an alarm notified from each of the process controllers via the network N1, the protocol server 40, and the network N2, and displays an alarm message and a current alarm state. The operator can confirm a condition of the entire process control system 500, which condition includes the alarm message and the current alarm state, through the display contents displayed on the integrated server device 100. In addition, the operator inputs instruction operation corresponding to the confirmed condition of the process control system 500 to the integrated server device 100, and the integrated server device 100 transmits an instruction signal corresponding to the instruction operation to the advanced control device 30.

The cloud server 200 is realized as, for example, a public cloud. The cloud server 200 is provided to be able to provide, for example, an execution service that executes the estimation processing in Step S2 and the physical phenomenon detection processing in Step S3 described above.

### [Configuration example of the edge device 50]

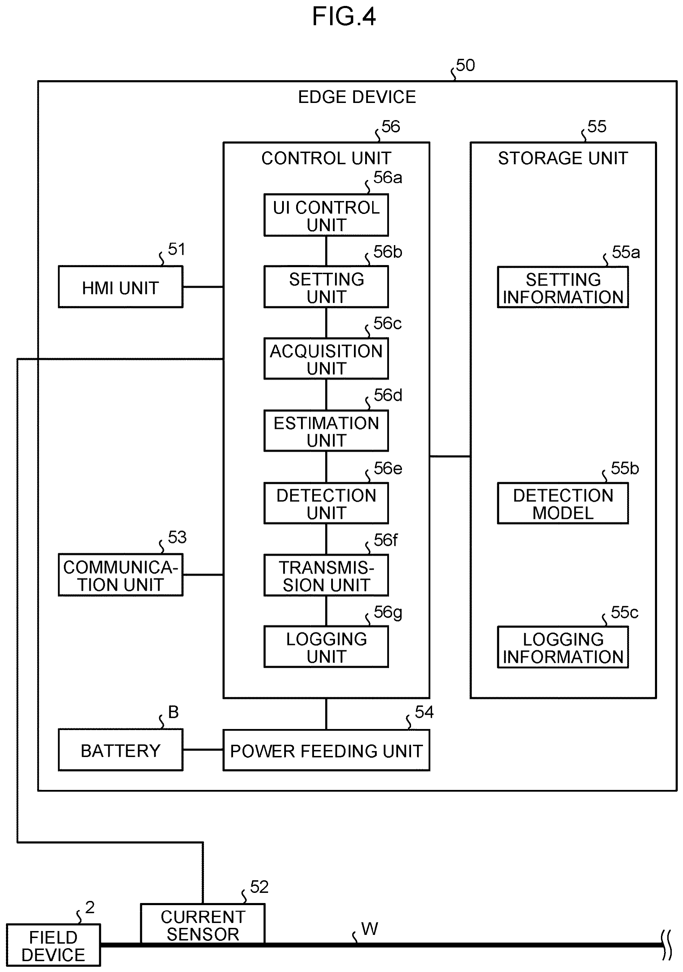

Next, FIG. 4 is a block diagram illustrating a configuration example of the edge device 50 according to the embodiment. Note that only components necessary for the description of the present embodiment are illustrated as functional blocks, and illustrations of general components are omitted in FIG. 4.

Note that a description of the already described components is appropriately simplified or omitted in the description using FIG. 4.

As illustrated in FIG. 4, the edge device 50 includes a human machine interface (HMI) unit 51, a current sensor 52, a communication unit 53, a power feeding unit 54, a storage unit 55, and a control unit 56.

The HMI unit 51 is a component that provides an interface part related to an input and an output to a user (such as the operator). The HMI unit 51 includes an input interface that receives input operation from the user. The input interface is realized by, for example, a touch panel, a pointing device, a button, a microphone, or the like. In addition, the input interface may be realized by a software part.

In addition, the HMI unit 51 includes an output interface that presents image information, light emission information, audio information, vibration information, and the like to the user. The output interface is realized by, for example, a display, a light-emitting diode (LED), a speaker, a vibrator, or the like. Note that the HMI unit 51 may be realized by a touch panel display in which an input interface and an output interface are integrated.

In addition, since the edge device 50 is a small device, the HMI unit 51 may be an interface part that can perform a remote input and a remote output from a remotely connected personal computer (PC) or the like.

Since the current sensor 52 has been described, the description thereof is omitted here. The communication unit 53 communicably connects the edge device 50 to the external devices such as the data logger 20, another edge device 50, the integrated server device 100, and the cloud server 200 by the wireless communication and/or wired communication by Wi-Fi (registered trademark), Bluetooth (registered trademark), or the like. The communication unit 53 is realized by a network adapter or the like.

The power feeding unit 54 is connected to a power source and feeds power to the edge device 50. The edge device 50 is mounted with a battery B, and the power feeding unit 54 secures the power source with the battery B. The battery B may be a solar battery, a dry battery, or the like.

The storage unit 55 is realized by a storage device such as a random access memory (RAM) or a flash memory. The storage unit 55 may be realized by a memory card such as an SD card. The storage unit 55 stores an information processing program according to the embodiment which program is executed by the control unit 56. Furthermore, the storage unit 55 stores various kinds of information used in the information processing executed by the control unit 56.

In the example of FIG. 4, the storage unit 55 stores setting information 55a, a detection model 55b, and logging information 55c. The setting information 55a is information related to setting of processing executed by the edge device 50. The setting information 55a includes, for example, information such as necessity of execution of the estimation processing in Step S2 and the detection processing in Step S3 described above. Furthermore, the setting information 55a includes, for example, information of the external device or the like to be a data transmission destination. Furthermore, the setting information 55a includes, for example, information such as a determination threshold used in the detection processing.

The setting information 55a is set by a setting unit 56b (described later) on the basis of user operation or the like according to the installation form of the edge device 50, setting contents of the field device 2 to be attached, or the like.

The detection model 55b is an analysis model used for the detection processing of the physical phenomenon. The detection model 55b may be, for example, a mathematical model described in a mathematical expression for analyzing a physical phenomenon to be detected, or a learning model learned by artificial intelligence (AI) using an algorithm of machine learning. In a case of the learning model, for example, in a case where the estimated raw data or the raw data output from the field device 2 is input, the detection model 55b is learned to output, when the raw data corresponds to one or more predetermined physical phenomena, a discrimination value of the physical phenomena. As the algorithm of the machine learning, for example, deep learning or the like can be used, but the algorithm is not limited.

The logging information 55c is a log data group related to information processing in the edge device 50, and is stored by a logging unit 56g (described later).

The control unit 56 corresponds to a so-called processor. The control unit 56 is realized by a central processing unit (CPU), a micro processing unit (MPU), or the like.

The control unit 56 reads the information processing program according to the embodiment, which program is stored in the storage unit 55, and executes the program with the RAM as a work area. The control unit 56 can also be realized by an integrated circuit such as an application specific integrated circuit (ASIC) or a field programmable gate array (FPGA).

The control unit 56 includes a user interface (UI) control unit 56a, the setting unit 56b, an acquisition unit 56c, an estimation unit 56d, a detection unit 56e, a transmission unit 56f, and the logging unit 56g, and realizes or executes a function and an action of information processing described below.

Note that an internal configuration of the control unit 56 is not limited to the configuration illustrated in FIG. 4, and may be another configuration as long as information processing described below can be executed. Furthermore, a connection relationship of the processing units included in the control unit 56 is not limited to the connection relationship illustrated in FIG. 4, and may be another connection relationship.

The UI control unit 56a performs input/output control for the user via the HMI unit 51. Under the input/output control by the UI control unit 56a, the setting unit 56b receives the operation by the user on the setting for the edge device 50 via the HMI unit 51, and sets the setting contents corresponding to the operation in the setting information 55a.

Note that, for example, the user may set a determination threshold or the like used in the detection processing on site or may set the threshold remotely. Furthermore, after setting the determination threshold, the user may set alarm notification of a case where the threshold is exceeded. Furthermore, the user may record the date and time of a case where the threshold is exceeded. By setting behavior of the edge device 50 of a case where such a threshold is exceeded, it is possible to utilize the edge device 50 as a so-called drive recorder.

The acquisition unit 56c reads and acquires data flowing through the conductive wire W via the current sensor 52. The estimation unit 56d executes the estimation processing in Step S2 described above.

Specifically, the estimation unit 56d converts the data acquired by the acquisition unit 56c into a physical quantity. For example, when the field device 2 is the pressure transmitter 2a and the acquired data is a current value of 4 to 20 mA (or a voltage value of 1 to 5 V), the estimation unit 56d converts the current value into a pressure value of 200 to 500 kPa.

In addition, the estimation unit 56d estimates the raw data on the basis of the converted pressure value. At this time, the estimation unit 56d estimates the raw data by the differential processing, the difference processing, the partial differential processing, or the like as described above.

The detection unit 56e executes the detection processing in Step S3 described above. By using the detection model 55b, the detection unit 56e analyzes the raw data estimated by the estimation unit 56d. In addition, the detection unit 56e determines presence or absence of generation of a physical phenomenon on the basis of a result of the analysis.

In a case where the detection unit 56e determines that the physical phenomenon is generated, the transmission unit 56f transmits a detection result of the physical phenomenon to the higher device via the communication unit 53. The logging unit 56g stores a log data group that is related to information processing in the edge device 50 and that includes the detection result of the physical phenomenon in the logging information 55c.

### [Processing procedure executed by the edge device 50]

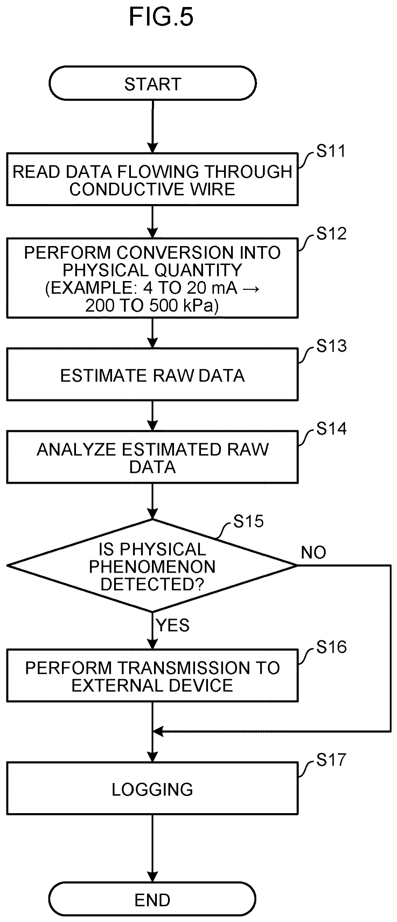

Next, a processing procedure executed by the edge device 50 will be described with reference to FIG. 5. FIG. 5 is a flowchart illustrating the processing procedure executed by the edge device 50 according to the embodiment.

Note that a processing procedure of a case where the setting information 55a is already set and the detection processing in both Step S2 and Step S3 described above is performed by the edge device 50 on the basis of the setting information 55a is illustrated in FIG. 5. Other cases where processing is shared between the edge device 50 and the external device will be described later with reference to FIG. 6 to FIG. 9.

As illustrated in FIG. 5, the acquisition unit 56c first acquires smoothed data by reading data flowing through the conductive wire W (Step S11).

Subsequently, the estimation unit 56d converts the acquired smoothed data into a physical quantity (Step S12). As illustrated in the drawing, in a case where the field device 2 is the pressure transmitter 2a, the estimation unit 56d converts, for example, a current value of 4 to 20 mA into a pressure value of 200 to 500 kPa.

Then, the estimation unit 56d estimates the raw data on the basis of the smoothed data after the conversion (Step S13).

Subsequently, the detection unit 56e analyzes the raw data estimated by the estimation unit 56d by using the detection model 55b (Step S14). Then, the detection unit 56e determines whether a physical phenomenon is detected as a result of the analysis (Step S15).

Here, in a case where the physical phenomenon is detected (Step S15, Yes), the transmission unit 56f transmits the detection result of the physical phenomenon to the external device (Step S16). In a case where the physical phenomenon is not detected (Step S15, No), a transition to Step S17 is performed.

Then, the logging unit 56g executes logging of saving a log data group related to the executed information processing in the logging information 55c (Step S17). From the above, one time of the processing procedure illustrated in FIG. 5 ends. This processing procedure is repeated while the process control system 500 is in operation.

Note that the detection unit 56e may perform preprocessing of executing fast Fourier transform (FFT) and removing a low-frequency component, which indicates a movement of a low-cycle process, or the like and is unnecessary for detection of a physical phenomenon, by a high-pass filter or the like between Step S13 and S14. In this case, the detection unit 56e executes arithmetic processing related to the analysis in Step S14 after executing inverse FFT on the data from which the unnecessary low-frequency component is removed.

### [Example of a pattern of processing sharing]

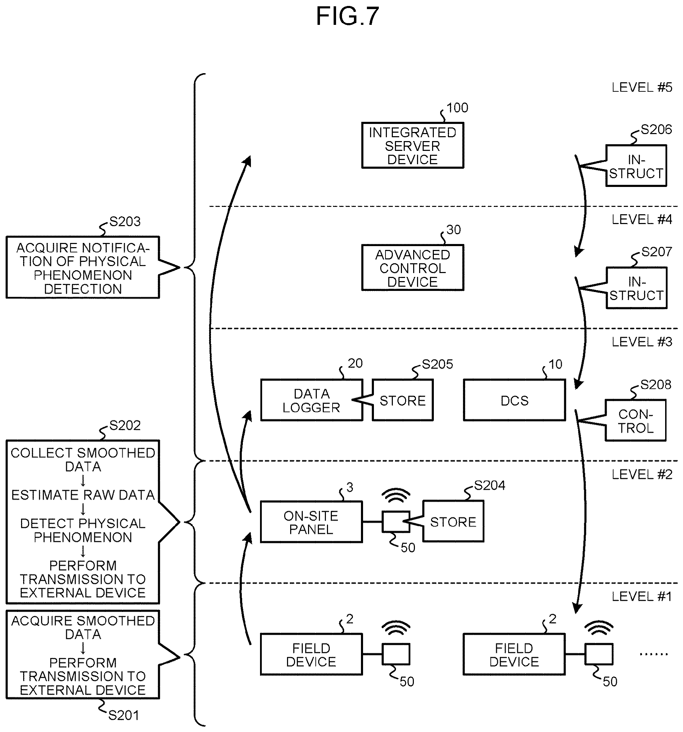

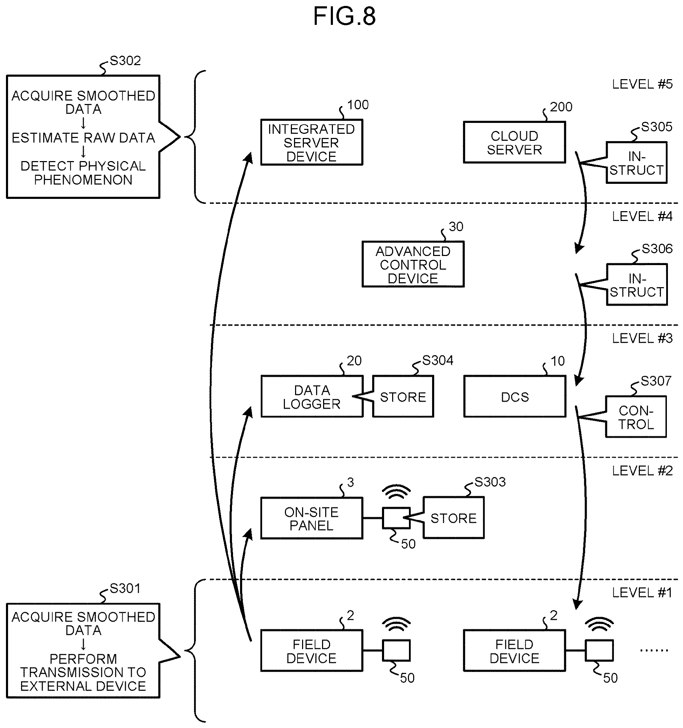

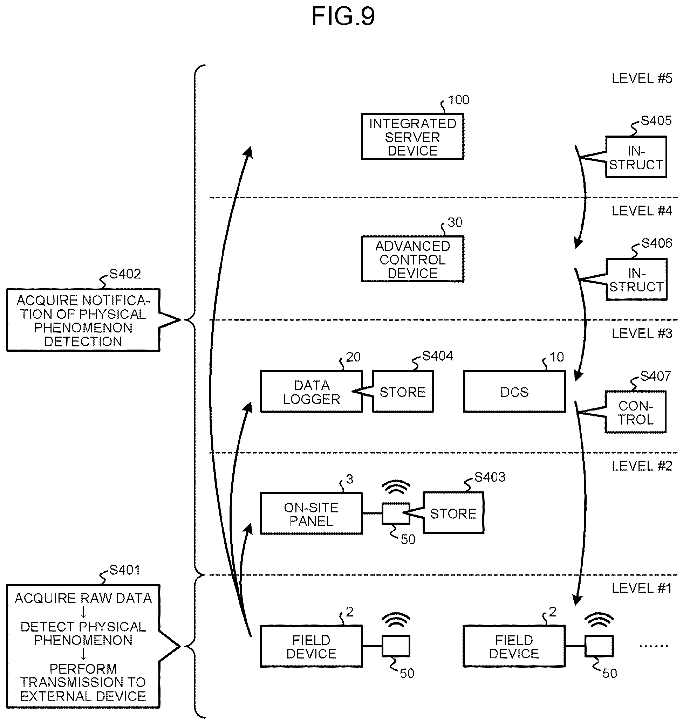

Next, an example of a pattern of processing sharing between the edge device 50 and the external device will be described with reference to FIG. 6 to FIG. 9. FIG. 6 is a view illustrating an example of a pattern of processing sharing between devices (part 1). FIG. 7 is a view illustrating an example of a pattern of processing sharing between devices (part 2). FIG. 8 is a view illustrating an example of a pattern of processing sharing between devices (part 3). FIG. 9 is a view illustrating an example of a pattern of processing sharing between devices (part 4).

Note that in FIG. 6 to FIG. 9, a relationship between the devices is illustrated by being classified into levels of levels #1 to #5 according to the bus-type network topology illustrated in FIG. 3.

In addition, an example in which the edge device 50 at the level #1 executes the processing procedure of FIG. 5 is illustrated in FIG. 6. In a case of this example, each of the edge devices 50 at the level #1 acquires the smoothed data from each of the field devices 2, estimates the raw data, detects the physical phenomenon, and transmits the physical phenomenon to the external device when the physical phenomenon is detected (Step S101).

Then, in this case, for example, at least one of the edge device 50 of the on-site panel 3 at the level #2, the data logger 20 at the level #3, or the integrated server device 100 at the level #5 acquires the notification of the physical phenomenon detection (Step S102).

In a case where the edge device 50 of the on-site panel 3 at the level #2 acquires the notification, this is logged and stored (Step S103). Note that, in this case, it can be said that the edge device 50 at the level #2 functions as a data logger of each of the edge devices 50 at the level #1 aggregated by itself.

In a case where the data logger 20 at the level #3 acquires the notification, this is logged and stored (Step S104). In this case, the data logger 20 at the level #3 functions as a data logger of all the edge devices 50 provided in the process control system 500.

In a case where the integrated server device 100 at the level #5 acquires the notification, the integrated server device 100 gives the notification of the physical phenomenon detection as alarm information, for example, and receives instruction operation by the operator which operation corresponds to the generated physical phenomenon. In addition, in a case of receiving the instruction operation, the integrated server device 100 gives an instruction to the advanced control device 30 at the level #4 according to the operation (Step S105).

The advanced control device 30 at the level #4 determines an operation condition in accordance with this instruction and gives an instruction to the DCS 10 at the level #3 (Step S106). Then, the DCS 10 at the level #3 controls each of the field devices 2 at the level #1 according to this instruction (Step S107).

Next, an example in which the edge device 50 at the level #2 estimates the raw data and detects the physical phenomenon is illustrated in FIG. 7. In a case of this example, each of the edge devices 50 at the level #1 acquires the smoothed data from each of the field devices 2 and transmits the acquired smoothed data to the external device (Step S201). Here, the external device is the edge device 50 of the level #2.

Then, the edge device 50 at the level #2 collects the smoothed data from each of the edge devices 50 at the level #1, estimates the raw data, detects the physical phenomenon, and performs transmission to the external device (Step S202).

At this time, the edge device 50 at the level #2 can detect the physical phenomenon on the basis of a plurality of pieces of the raw data corresponding to each of the edge devices 50 at the level #1. That is, in this case, the edge device 50 at the level #2 can detect the physical phenomenon with high accuracy by comprehensively evaluating the raw data corresponding to each of the edge devices 50 at the level #1.

Then, by Step S202, for example, at least one of the data logger 20 at the level #3 or the integrated server device 100 at the level #5 acquires the notification of the physical phenomenon detection (Step S203). Note that the edge device 50 at the level #2 logs and stores the raw data of each of the edge devices 50 at the level #1 and the detection result of the physical phenomenon based thereon (Step S204).

In a case of acquiring the notification, the data logger 20 at the level #3 performs logging and storing thereof (Step S205).

In a case where the integrated server device 100 at the level #5 acquires the notification, the integrated server device 100 gives the notification of the physical phenomenon detection as alarm information, for example, and receives instruction operation by the operator which operation corresponds to the generated physical phenomenon. In addition, in a case of receiving the instruction operation, the integrated server device 100 gives an instruction to the advanced control device 30 at the level #4 according to the operation (Step S206).

The advanced control device 30 at the level #4 determines an operation condition in accordance with this instruction and gives an instruction to the DCS 10 at the level #3 (Step S207). Then, the DCS 10 at the level #3 control each of the field devices 2 at the level #1 according to this instruction (Step S208).

Next, an example of a case where the integrated server device 100 and/or the cloud server 200 at the level #5 performs estimation of the raw data and detection of the physical phenomenon is illustrated in FIG. 8. In a case of this example, each of the edge devices 50 at the level #1 acquires the smoothed data from each of the field devices 2 and transmits the acquired smoothed data to the external device (Step S301).

Then, in this case, at least the integrated server device 100 and/or the cloud server 200 at the level #5 acquires the smoothed data, estimates the raw data, and detects the physical phenomenon (Step S302). Note that each of the edge devices 50 at the level #1 may transmit the smoothed data to the edge device 50 at the level #2 and the data logger 20 at the level #3 in Step S301.

In a case of acquiring the notification, the edge device 50 at the level #2 performs logging and storing thereof (Step S303). In addition, in a case of acquiring the notification, the data logger 20 at the level #3 performs logging and storing thereof (Step S304).

In addition, in a case where the integrated server device 100 at the level #5 detects the physical phenomenon in Step S302, the integrated server device 100 gives notification of the physical phenomenon detection as alarm information, for example, and receives instruction operation by the operator which operation corresponds to the generated physical phenomenon. Furthermore, in a case where the cloud server 200 at the level #5 detects the physical phenomenon in Step S302, the integrated server device 100 acquires notification thereof from the cloud server 200. Similarly, the integrated server device 100 receives the instruction operation by the operator which operation corresponds to the generated physical phenomenon.

Then, in a case of receiving the instruction operation, the integrated server device 100 gives an instruction to the advanced control device 30 at the level #4 according to the operation (Step S305).

The advanced control device 30 at the level #4 determines an operation condition in accordance with this instruction and gives an instruction to the DCS 10 at the level #3 (Step S306). Then, the DCS 10 at the level #3 control each of the field devices 2 at the level #1 according to this instruction (Step S307).

Next, an example of a case where the estimation processing of the raw data is unnecessary in the edge devices 50 at the level #1 is illustrated in FIG. 9 with respect to the example illustrated in FIG. 6. In a case of this example, each of the edge devices 50 at the level #1 acquires the raw data from each of the field devices 2, detects the physical phenomenon on the basis of the raw data, and transmits the physical phenomenon to the external device when the physical phenomenon is detected (Step S401).

Since Step S402 to S407 following the above are similar to Step S102 to S107 in FIG. 6, a description thereof is omitted here.

### [Case of configuring a mesh network]

Note that the process control system 500 may configure a mesh network with the edge device 50 and the external device and share the physical phenomenon detected in the mesh network.

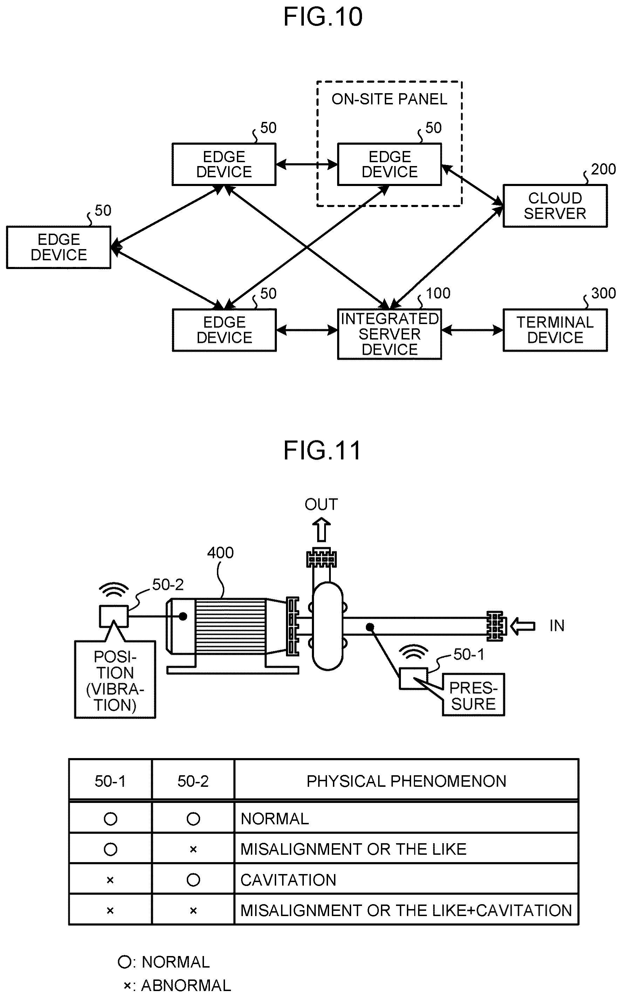

Next, a case of configuring this mesh network will be described with reference to FIG. 10 to FIG. 11. FIG. 10 is a view for describing the case of configuring the mesh network. FIG. 11 is a view for describing a case where the detected physical phenomenon is shared.

As illustrated in FIG. 10, each of the edge devices 50 including the edge device 50 of the on-site panel 3, the integrated server device 100, the cloud server 200, and the like may be included in the mesh network. Furthermore, in this case, for example, a terminal device 300 connected to the integrated server device 100 or the like and used by the operator or the like may be included in the mesh network.

In this case, the physical phenomenon detected in each device may be shared in the mesh network.

As illustrated in FIG. 11, for example, it is assumed that an edge device 50-1 detects the physical phenomenon on the basis of pressure data on an input (IN) side of a pump 400, and an edge device 50-2 detects the physical phenomenon on the basis of position (or vibration) data of the pump 400.

In this case, it is possible to specify a true cause of the physical phenomenon appearing in the pump 400, for example, on the basis of a combination of detection results of the edge devices 50-1 and 50-2.

For example, as illustrated in FIG. 11, in a case where the edge device 50-1 does not detect an abnormality (that is, generation of a physical phenomenon) and the edge device 50-2 detects the abnormality, it is possible to specify the generation of "misalignment or the like" by sharing these detection results.

Furthermore, for example, in a case where the edge device 50-2 does not detect the abnormality and the edge device 50-1 detects the abnormality, it is possible to specify generation of "cavitation" by sharing these detection results. Furthermore, for example, in a case where both the edge devices 50-1 and 50-2 detect the abnormality, it is possible to specify generation of "misalignment or the like + cavitation" by sharing these detection results. That is, the "sharing" described herein enables comprehensive determination of the physical phenomenon detected by each device. This makes it possible to detect the physical phenomenon with higher accuracy. Note that although illustration is omitted, in a case of the example of FIG. 11, for example, another edge device 50 that detects the physical phenomenon on the basis of pressure data on an output (OUT) side of the pump 400 may be further provided. Of course, it becomes possible to specify a true cause of the physical phenomenon in more detail by performing the determination in further consideration of the detection result of the other edge device 50.

### [Modification example of an installation form of the edge device 50]

Next, a modification example of the installation form of the edge device 50 will be described with reference to FIG. 12 and FIG. 13. FIG. 12 is a view for describing an edge device 50A according to a first modification example. FIG. 13 is a view for describing an edge device 50B according to a second modification example.

The edge device 50 according to the embodiment includes the current sensor 52 realized as the clampless sensor, and reads data flowing through the conductive wire W toward the DCS 10. In addition, the edge device 50 is mounted with a battery B, and the power source is secured by the battery B.

On the other hand, as illustrated in FIG. 12, the edge device 50A according to the first modification example may be directly connected to the conductive wire W. In this case, for example, since the edge device 50A directly reads an output value of the pressure transmitter 2a from the conductive wire W, the current sensor 52 becomes unnecessary. In addition, since the edge device 50A can secure a power source via the conductive wire W, the battery B is also unnecessary.

Since an instrumentation cable may extend for a several kilometers in the plant 1, it is preferable that the edge device 50A is directly connected to the conductive wire W in order to read data at a high speed. In addition, when the edge device 50A is directly connected to the conductive wire W, a program that executes the estimation processing and the detection processing described above can also be implemented as firmware of the pressure transmitter 2a.

In addition, as illustrated in FIG. 13, the edge device 50B according to the second modification example may be provided in such a manner as to be attachable to, for example, a socket SC provided in a vicinity of a terminal block on a back of the pressure transmitter 2a by insertion. In this case, the socket SC is connected to the conductive wire W to the DCS 10, and the edge device 50B directly reads an output value of the pressure transmitter 2a from the conductive wire W, similarly to the edge device 50A.

Thus, the current sensor 52 becomes unnecessary. In addition, since the edge device 50B can secure a power source via the conductive wire W, the battery B is also unnecessary similarly to the edge device 50A.

### [About collection and replacement of the edge device 50 or 50B]

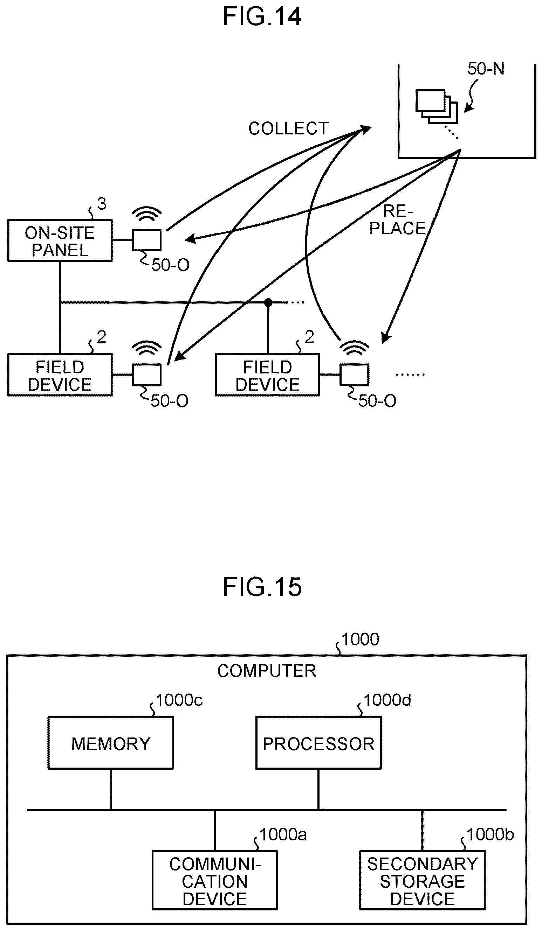

In addition, the edge device 50 may be appropriately collected and replaced as an advantage of being a small device and being easily attached/detached. FIG. 14 is a view for describing collection and replacement of the edge device 50 or 50B.

As illustrated in FIG. 14, with respect to the edge device 50 or 50B, for example, the edge device 50 or 50B of the on-site panel 3 which device functions at least as a data logger is replaceable from an old edge device 50-O to a new edge device 50-N in a daily inspection (such as on-site patrol) of the plant 1. By analyzing the collected data and reflecting information in a daily report, it is possible to use the data for production and maintenance of the plant 1.

In addition, the old edge device 50-O can be collected and replaced with the new edge device 50-N as appropriate with respect to each of the edge devices 50 or 50B of other than the on-site panel 3. For example, in the plant 1 in a remote place (such as a desert) where network access from other than the plant 1 is not possible, the edge devices 50 or 50B can be totally replaced for each inspection cycle on site.

At this time, it is also possible to arbitrarily change a type of data to be acquired before and after the replacement (for example, pressure is acquired in a first cycle, and temperature is acquired in a second cycle). In addition, it is also possible to arbitrarily change the physical phenomenon to be detected before and after the replacement.

### [Effects]

As described above, the edge device 50 according to the embodiment is a portable information processing device provided in a manner of being attachable to the field device 2 of the plant 1, and includes the acquisition unit 56c that acquires the smoothed or non-smoothed output data output from the field device 2, the estimation unit 56d that estimates the non-smoothed output data in a case where the output data is smoothed, the detection unit 56e that detects the physical phenomenon generated in the field device 2 by analyzing the non-smoothed output data, and the transmission unit 56f that transmits the detection result of the physical phenomenon to the external device. Thus, according to the edge device 50 according to the embodiment, retrofitting to the field device 2 is possible, and it is possible to detect an instantaneous physical phenomenon without changing the design of the existing process control system 500. Thus, according to the edge device 50 according to the embodiment, it is possible to easily detect the physical phenomenon generated in the plant 1 while controlling the influence on the existing process control.

In addition, the edge device 50 is detachably attached to the field device 2. Thus, the edge device 50 according to the embodiment can be easily attached to or detached from the field device 2. In addition, collection and replacement can be easily performed, and maintainability of the plant 1 can also be improved.

In addition, the edge device 50 includes the current sensor 52 (corresponding to an example of a "non-contact sensor") that is the clampless sensor, and the acquisition unit 56c indirectly acquires output data from the conductive wire W of the field device 2 by the current sensor 52. Thus, according to the edge device 50 according to the embodiment, it becomes possible to easily acquire the output data of the field device 2 without changing the connection of the conductive wire W of the field device 2.

In addition, the edge device 50 is mounted with the battery B, and operates with the battery B as the power source. Thus, according to the edge device 50 according to the embodiment, by operating with an own power source, it is possible to detect the physical phenomenon generated in the plant 1 without affecting a power system of the plant 1.

In addition, the edge device 50 is connected to the conductive wire W of the field device 2, and the acquisition unit 56c directly acquires the output data from the conductive wire W. Thus, according to the edge device 50 according to the embodiment, it becomes possible to acquire the output data of the field device 2 with high quality.

In addition, the edge device 50 operates with the field device 2 as the power source via the conductive wire W. Thus, according to the edge device 50 according to the embodiment, it becomes possible to detect the physical phenomenon generated in the plant 1 while continuously operating together with the field device 2 without becoming inoperable due to a battery shortage.

In addition, the edge device 50 is attached to at least one of the pressure transmitter 2a, the temperature transmitter 2b, the flowmeter 2c, the control valve 2d, or the scientific device 2e in the field device 2. Thus, according to the edge device 50 according to the embodiment, it becomes possible to detect the physical phenomenon generated in at least the pressure transmitter 2a, the temperature transmitter 2b, the flowmeter 2c, the control valve 2d, and the scientific device 2e.

In addition, in a case where the output data is smoothed, the estimation unit 56d estimates the non-smoothed output data by at least one of the differential processing, the difference processing, or the partial differential processing after converting the output data into the physical quantity corresponding to the field device 2. Thus, according to the edge device 50 according to the embodiment, it is possible to estimate the raw data of the field device 2 in at least one of the differential processing, difference processing, or the partial differential processing.

In addition, the detection unit 56e executes the fast Fourier transform and removes the low frequency component, and then analyzes the output data on which the inverse fast Fourier transform is executed. Thus, according to the edge device 50 according to the embodiment, it becomes possible to detect the physical phenomenon with high accuracy by analyzing the data from which the component unnecessary for detecting the physical phenomenon has been removed in advance.

In addition, the detection unit 56e detects at least one of the cavitation, the water hammer, or the slag flow generated in a pipe connected to the field device 2 as the physical phenomenon. Thus, according to the edge device 50 according to the embodiment, at least one of the cavitation, the water hammer, or the slag flow can be detected as the physical phenomenon.

In addition, the edge device 50 includes the logging unit 56g that stores the log data of the information processing executed by the acquisition unit 56c, the estimation unit 56d, and the detection unit 56e as the logging information 55c. Thus, according to the edge device 50 according to the embodiment, utilization as a so-called drive recorder becomes possible.

Furthermore, the edge device 50 is further attached to the on-site panel 3 that concentrates the field device 2. Thus, according to the edge device 50 according to the embodiment, by the installation on the on-site panel 3, it is possible to perform the attachment in which the power source is easily secured. In addition, by the installation on the on-site panel 3, it becomes possible to function as the data logger of the entire field device 2 aggregated by the on-site panel 3.

Furthermore, the external device is at least one of the data logger 20 included in the process control system 500 of the plant 1, the integrated server device 100 and/or the cloud server 200 (corresponding to an example of a "server device"), or the edge device 50 attached to the on-site panel 3. Thus, according to the edge device 50 according to the embodiment, by notifying these external devices of the generation of the physical phenomenon, it is possible to leave log data or perform control corresponding to the physical phenomenon on the basis of an instruction system of the existing process control system 500.

In the information processing method according to the embodiment, the portable edge device 50 (corresponding to an example of a "computer") provided in a manner of being attachable to the field device 2 of the plant 1 executes processing of acquiring the smoothed or non-smoothed output data output from the field device 2, estimating the non-smoothed output data in a case where the output data is smoothed, detecting the physical phenomenon generated in the field device 2 by analyzing the non-smoothed output data, and transmitting the detection result of the physical phenomenon to the external device. Thus, according to the information processing method according to the embodiment, by using the edge device 50 that can be retrofitted to the field device 2, it becomes possible to detect the instantaneous physical phenomenon without changing the design of the existing process control system 500. That is, according to the information processing method according to the embodiment, it is possible to easily detect the physical phenomenon generated in the plant 1 while controlling the influence on the existing process control.

In addition, the information processing program according to the embodiment causes the portable edge device 50 provided in a manner of being attachable to the field device 2 of the plant 1 to execute processing of acquiring the smoothed or non-smoothed output data output from the field device 2, estimating the non-smoothed output data in a case where the output data is smoothed, detecting the physical phenomenon generated in the field device 2 by analyzing the non-smoothed output data, and transmitting the detection result of the physical phenomenon to the external device. That is, the edge device 50, which is the portable computer that can be retrofitted to the field device 2, executes acquisition processing of acquiring the smoothed or non-smoothed output data output from the field device 2, executes estimation processing of estimating the non-smoothed output data in a case where the output data is smoothed, executes detection processing of detecting the physical phenomenon generated in the field device 2 by analyzing the non-smoothed output data, and executes transmission processing of transmitting the detection result of the physical phenomenon to the external device. Thus, according to the information processing program according to the embodiment, it becomes possible to detect the instantaneous physical phenomenon without changing the design of the existing process control system 500. That is, according to the information processing method according to the embodiment, it is possible to easily detect the physical phenomenon generated in the plant 1 while controlling the influence on the existing process control.

### [Other embodiments]

Although the embodiment of the present invention has been described in the above, the present invention may be implemented in various different forms other than the above-described embodiment.

### [System]

The processing procedure, control procedure, specific names, and information including various kinds of data and parameters illustrated in the document and the drawings can be arbitrarily changed unless otherwise specified.

In addition, each component of each device illustrated in the drawings is functionally conceptual, and is not necessarily physically configured as illustrated in the drawings. That is, specific forms of distribution/integration of the devices are not limited to those illustrated in the drawings. That is, all or a part thereof can be functionally or physically distributed/integrated in arbitrary units according to various loads, usage conditions, and the like.

Furthermore, all or an arbitrary part of each processing function performed in each of the devices may be realized by a CPU and a program analyzed and executed by the CPU, or may be realized as hardware by wired logic.

### [Hardware]

The edge devices 50, 50A, and 50B according to the above-described embodiment are realized by a computer 1000 having a configuration in a manner illustrated in FIG. 15, for example. Hereinafter, the edge device 50 will be described as an example. FIG. 15 is a hardware configuration diagram illustrating an example of the computer 1000 that realizes a function of the edge device 50 according to the embodiment.

As illustrated in FIG. 15, the computer 1000 includes a communication device 1000a, a secondary storage device 1000b, a memory 1000c, and a processor 1000d. In addition, the units illustrated in FIG. 15 are connected to each other by a bus or the like.

The communication device 1000a is an NIC or the like, and communicates with other devices. The secondary storage device 1000b is realized by a flash memory or the like, and stores a program causing the functions illustrated in FIG. 4 to operate, and a database.

The processor 1000d reads a program that executes processing similar to that of each of the processing units illustrated in FIG. 4 from the secondary storage device 1000b or the like and develops the program in the memory 1000c, and operates a thread to execute each of the functions described with reference to FIG. 4 and the like. For example, this thread executes a function similar to that of each of the processing units included in the edge device 50. Specifically, the processor 1000d reads programs having functions similar to those of the UI control unit 56a, the setting unit 56b, the acquisition unit 56c, the estimation unit 56d, the detection unit 56e, the transmission unit 56f, and the logging unit 56g from the secondary storage device 1000b or the like. Then, the processor 1000d executes a thread that executes processing similar to that of the UI control unit 56a, the setting unit 56b, the acquisition unit 56c, the estimation unit 56d, the detection unit 56e, the transmission unit 56f, the logging unit 56g, and the like.

As described above, the computer 1000 operates as an information processing device that executes various processing methods by reading and executing the program. Furthermore, the computer 1000 can also realize a function similar to that of the above-described embodiment by reading the program from a recording medium with a medium reading device and executing the read program. Note that the program mentioned here is not necessarily executed only by the computer 1000. For example, the present invention can be similarly applied to a case where a computer having a different hardware configuration or a server executes the program or a case where these execute the program in cooperation.

This program can be distributed via a network such as the Internet. In addition, this program is recorded on a computer-readable recording medium such as a hard disk, a flexible disk (FD), a CD-ROM, a magneto-optical disk (MO), or a digital versatile disc (DVD), and can be executed by being read from the recording medium by the computer. The recording medium in which the program is recorded is also one aspect of the present disclosure.

### [Others]

Some examples of combinations of the disclosed technical features are described below.
(1) A portable information processing device provided in a manner of being attachable to a field device of a plant, the information processing device comprising:
   an acquisition unit that acquires smoothed or non-smoothed output data output from the field device;
   an estimation unit that estimates the non-smoothed output data in a case where the output data is smoothed;
   a detection unit that detects a physical phenomenon generated in the field device by analyzing the non-smoothed output data; and
   a transmission unit that transmits a detection result of the physical phenomenon to an external device.
(2) The information processing device according to (1),
   the information processing device being detachably attached to the field device.
(3) The information processing device according to (2), further comprising
   a non-contact sensor, wherein
   the acquisition unit
   indirectly acquires the output data from a conductive wire of the field device by the non-contact sensor.
(4) The information processing device according to (3), wherein
   a battery is mounted, and the information processing device operates with the battery as a power source.
(5) The information processing device according to (1) or (2), wherein
   the information processing device is connected to a conductive wire of the field device, and
   the acquisition unit
   directly acquires the output data from the conductive wire.
(6) The information processing device according to (5), wherein
   the information processing device operates with the field device as a power source via the conductive wire.
(7) The information processing device according to any one of (1) to (6), wherein
   the information processing device is attached to at least one of a pressure transmitter, a temperature transmitter, a flowmeter, a control valve, or a scientific device in the field device.
(8) The information processing device according to any one of (1) to (7), wherein
   the estimation unit
   estimates, in a case where the output data is smoothed, the non-smoothed output data by at least one of differential processing, difference processing, or partial differential processing after converting the output data into a physical quantity corresponding to the field device.
(9) The information processing device according to (8), wherein
   the detection unit
   analyses the output data on which an inverse fast Fourier transform is executed after execution of a fast Fourier transform and a removal of a low-frequency component.
(10) The information processing device according to any one of (1) to (9), wherein
   the detection unit
   detects, as the physical phenomenon, at least one of cavitation, a water hammer, or a slag flow generated in a pipe connected to the field device.
(11) The information processing device according to any one of (1) to (10), further comprising
   a logging unit that stores log data of information processing executed by the acquisition unit, the estimation unit, and the detection unit as logging information.
(12) The information processing device according to any one of (1) to (11), wherein
   the information processing device is further attached to an on-site panel that concentrates the field device.
(13) The information processing device according to (12), wherein
   the external device is
   at least one of a data logger included in a process control system of the plant, a server device, or the information processing device attached to the on-site panel.
(14) An information processing method in which
   a portable computer provided in a manner of being attachable to a field device of a plant executes processing of
   acquiring smoothed or non-smoothed output data output from the field device,
   estimating the non-smoothed output data in a case where the output data is smoothed,
   detecting a physical phenomenon generated in the field device by analyzing the non-smoothed output data, and
   transmitting a detection result of the physical phenomenon to an external device.
(15) An information processing program causing
   a portable computer provided in a manner of being attachable to a field device of a plant to execute processing of
   acquiring smoothed or non-smoothed output data output from the field device,
   estimating the non-smoothed output data in a case where the output data is smoothed,
   detecting a physical phenomenon generated in the field device by analyzing the non-smoothed output data, and
   transmitting a detection result of the physical phenomenon to an external device.
(16) A non-transitory computer-readable recording medium in which an information processing program is recorded, in which
   the information processing program causes
   a portable computer provided in a manner of being attachable to a field device of a plant to execute processing of
   acquiring smoothed or non-smoothed output data output from the field device,
   estimating the non-smoothed output data in a case where the output data is smoothed,
   detecting a physical phenomenon generated in the field device by analyzing the non-smoothed output data, and
   transmitting a detection result of the physical phenomenon to an external device.

### Reference Signs List

- 1: PLANT
- 2: FIELD DEVICE
- 2a: PRESSURE TRANSMITTER
- 2b: TEMPERATURE TRANSMITTER
- 2c: FLOWMETER
- 2d: CONTROL VALVE
- 2e: SCIENTIFIC DEVICE
- 3: ON-SITE PANEL
- 10: DCS
- 11: OPERATION CONTROL DEVICE
- 12: MONITORING DEVICE
- 20: DATA LOGGER
- 30: ADVANCED CONTROL DEVICE
- 40: PROTOCOL SERVER
- 50, 50A, 50B: EDGE DEVICE
- 51: HMI UNIT
- 52: CURRENT SENSOR
- 53: COMMUNICATION UNIT
- 54: POWER FEEDING UNIT
- 55: STORAGE UNIT
- 55a: SETTING INFORMATION
- 55b: DETECTION MODEL
- 55c: LOGGING INFORMATION
- 56: CONTROL UNIT
- 56a: UI CONTROL UNIT
- 56b: SETTING UNIT
- 56c: ACQUISITION UNIT
- 56d: ESTIMATION UNIT
- 56e: DETECTION UNIT
- 56f: TRANSMISSION UNIT
- 56g: LOGGING UNIT
- 100: INTEGRATED SERVER DEVICE
- 200: CLOUD SERVER
- 500: PROCESS CONTROL SYSTEM
- B: BATTERY

## Claims

1. A portable information processing device provided in a manner of being attachable to a field device of a plant, the information processing device comprising:
an acquisition unit that acquires smoothed or non-smoothed output data output from the field device;
an estimation unit that estimates the non-smoothed output data in a case where the output data is smoothed;
a detection unit that detects a physical phenomenon generated in the field device by analyzing the non-smoothed output data; and
a transmission unit that transmits a detection result of the physical phenomenon to an external device.

2. The information processing device according to claim 1,
the information processing device being detachably attached to the field device.

3. The information processing device according to claim 2, further comprising
a non-contact sensor, wherein
the acquisition unit
indirectly acquires the output data from a conductive wire of the field device by the non-contact sensor.

4. The information processing device according to claim 3, wherein
a battery is mounted, and the information processing device operates with the battery as a power source.

5. The information processing device according to claim 1 or 2, wherein
the information processing device is connected to a conductive wire of the field device, and
the acquisition unit
directly acquires the output data from the conductive wire.

6. The information processing device according to claim 5, wherein
the information processing device operates with the field device as a power source via the conductive wire.

7. The information processing device according to claim 1, wherein
the information processing device is attached to at least one of a pressure transmitter, a temperature transmitter, a flowmeter, a control valve, or a scientific device in the field device.

8. The information processing device according to claim 1, wherein
the estimation unit
estimates, in a case where the output data is smoothed, the non-smoothed output data by at least one of differential processing, difference processing, or partial differential processing after converting the output data into a physical quantity corresponding to the field device.

9. The information processing device according to claim 8, wherein
the detection unit
analyses the output data on which an inverse fast Fourier transform is executed after execution of a fast Fourier transform and a removal of a low-frequency component.

10. The information processing device according to claim 1, wherein
the detection unit
detects, as the physical phenomenon, at least one of cavitation, a water hammer, or a slag flow generated in a pipe connected to the field device.

11. The information processing device according to claim 1, further comprising
a logging unit that stores log data of information processing executed by the acquisition unit, the estimation unit, and the detection unit as logging information.

12. The information processing device according to claim 1, wherein
the information processing device is further attached to an on-site panel that concentrates the field device.

13. The information processing device according to claim 12, wherein
the external device is
at least one of a data logger included in a process control system of the plant, a server device, or the information processing device attached to the on-site panel.

14. An information processing method in which
a portable computer provided in a manner of being attachable to a field device of a plant executes processing of
acquiring smoothed or non-smoothed output data output from the field device, estimating the non-smoothed output data in a case where the output data is smoothed,
detecting a physical phenomenon generated in the field device by analyzing the non-smoothed output data, and
transmitting a detection result of the physical phenomenon to an external device.

15. An information processing program causing
a portable computer provided in a manner of being attachable to a field device of a plant to execute processing of
acquiring smoothed or non-smoothed output data output from the field device,
estimating the non-smoothed output data in a case where the output data is smoothed,
detecting a physical phenomenon generated in the field device by analyzing the non-smoothed output data, and
transmitting a detection result of the physical phenomenon to an external device.
